(19) Europäisches Patentamt / European Patent Office / Office européen des brevets

(11) **EP 4 170 935 A1**

(12) **EUROPEAN PATENT APPLICATION**

(43) Date of publication:
**26.04.2023 Bulletin 2023/17**

(21) Application number: **21203406.0**

(22) Date of filing: **19.10.2021**

(51) International Patent Classification (IPC):
**H04B 10/40** (2013.01)      **H04B 10/079** (2013.01)
**H04B 10/2507** (2013.01)      **H04B 10/556** (2013.01)

(52) Cooperative Patent Classification (CPC):
**H04B 10/40; H04B 10/07953; H04B 10/25073;**
**H04B 10/5561**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Nokia Solutions and Networks Oy**
**02610 Espoo (FI)**

(72) Inventor: **LE, Thai Son**
**Bedminster, 07921 (US)**

(74) Representative: **Novagraaf Technologies**
**Bâtiment O2**
**2, rue Sarah Bernhardt**
**CS90017**
**92665 Asnières-sur-Seine Cedex (FR)**

(54) **ADAPTIVE DIGITAL PRE-EMPHASIS FOR OPTICAL TRANSMISSIONS**

(57)     An optical transmitter for an fiber-optic communication system includes an adaptive digital pre-compensating filter configured to pre-compensate a data signal to be transmitted by an optical transmitter over a fiber-optic link based on a known transmitter response, a transmitter noise information, and an optical noise information for the fiber-optic link, e.g. an OSNR estimate at the receiver end of the fiber-optic link. The optical noise information may be provided with a feedback from the receiver, computationally using a link model, or by selecting from an OSNR or similar database. The link-adaptive pre-compensation may provide SNR gain compared to transmitter-only pre-compensation.

100

FIG. 1

**Description**

**TECHNICAL FIELD**

The present invention generally relates to optical communication systems, and more particularly relates to optical transmitter devices and systems with pre-compensation.

**BACKGROUND**

The symbol rates (baud rates) of optical communication systems, such as but not exclusively coherent optical communication systems, have been increasing over the last two decades. Increasing the baud rate is an effective technique for reducing the transportation cost per bit. Coherent optical transceivers exit that operate at a baud rate of ~ 100 gigabaud (Gbd), while new generations may operate at ~ 130 Gbd, and up to 200 Gbd and beyond. However, transmission quality at such high baud rates, may suffer from severe bandwidth limitations of opto-electronic components.

Digital pre-emphasis is a technique that may be used for combating bandwidth limitations of opto-electronic components in optical communication systems at high symbol rates. A common way of performing digital pre-emphasis is to invert the transmitter (Tx) response to pre-compensate for deviations of a cumulative response of various Tx components, including e.g. digital to analog converter (DAC), driver, and electro-optical (EO) modulator. However, this approach also has its limitations.

**SUMMARY**

An aspect of the present disclosure relates to a coherent optical transceiver including an optical transmitter and an optical receiver, the optical transmitter being configured to transmit a data-modulated optical signal to a remote optical transceiver via an fiber-optic link, the optical receiver being configured to receive an optical signal via the fiber-optic link from the remote optical transceiver. The optical transmitter is configured to shape an optical spectrum of the data-modulated optical signal based on optical noise information indicative of signal-to-noise ratio (SNR) for the data-modulated optical signal received via the fiber-optic link at the remote optical transceiver.

In some implementations, the coherent optical transceiver may include a digital data storage device storing the optical noise information. In some of such or other implementations, the coherent optical transceiver may be configured to extract the optical noise information from an optical signal received from the remote optical transceiver via the fiber-optic link.

In any of the above implementations, the optical noise information may be indicative of an optical signal to noise ratio (OSNR) for the data-modulated optical signal received via the fiber-optic link at the remote optical transceiver, and the optical transmitter may be configured to shape the data-modulated optical signal based at least in part on the OSNR

In any of the above implementations, the optical transmitter may comprise an electro-optical modulator to produce the data-modulated optical signal by modulating an optical carrier responsive to an operating signal, and a digital signal processor (DSP) configured to modify a spectral shape of an input digital data signal in dependence on the optical noise information to produce the operating signal therefrom in a manner such that the operating signal causes the electro-optical modulator to shape an optical spectrum of the data-modulated optical signal responsive to the optical noise information. In at least some of such implementation wherein the optical transmitter has a spectral response having a high-frequency roll-off, the DSP may be configured to provide a frequency-selective pre-emphasis to the spectral response of the optical transmitter so as to at least partially pre-compensate for the high-frequency roll-off of a transmitter response function, with the pre-emphasis being comparatively stronger for comparatively smaller values of the OSNR

In any of the above implementations, the apparatus may be configured to store transmitter information indicative of a signal to noise ratio (SNR) of the optical transmitter. When comprising the DSP, the DSP may be configured to modify a spectral shape of an input digital data signal based in part on an electrical to optical transmission (EOT) noise ratio, wherein said EOT noise ratio is a ratio of the SNR of the optical transmitter to the SNR for the data-modulated optical signal received via the fiber-optic link at the remote optical transceiver, or a ratio indicative thereof. In any of such implementations, the DSP may be further configured to provide a pre-emphasis to partially pre-compensate a spectral roll-off of the spectral response of the optical transmitter, the pre-emphasis being larger for smaller value of the OSNR frequency-selective pre-emphasis to a frequency response of the optical transmitter to at least partially pre-compensate for a high-frequency roll-off of a transmitter response function, with the pre-emphasis being comparatively stronger for comparatively smaller values of the EOT noise ratio.

In any of the above implantations, the apparatus may comprise the remote transceiver, and may further comprise the fiber-optic link. In any of such implementations, the remote transceiver may be configure to measure the OSNR for the data-modulated optical signal received via the fiber-optic link at the remote optical transceiver, and to transmit to the coherent optical transceiver the optical noise information comprising the OSNR

An aspect of the present disclosure relates to a method comprising: converting a digital data signal into an electrical operating signal; driving an electro-optical modulator with said electrical operating signal to produce a data-modulated optical carrier carrying the digital data signal; and transmitting said data modulated optical carrier to an fiber-optic link optically connected to a remote optical transceiver, wherein the converting causes the data-modulated optical carrier to be spectrally shaped based on optical noise information indicative of a signal-to-noise ratio (SNR) for the data-modulated optical signal received via the fiber-optic link at the remote optical transceiver.

In some implementations of the method, the converting may comprise modifying a spectral shape of the digital data signal based in part on the optical noise information so as to at least partially pre-compensate a high-frequency roll-off of a spectral response of the optical transmitter. In some implementations, the modifying may be performed based in part on transmitter information indicative of a transmitter SNR of the optical transmitter and a frequency response of the optical transmitter. In any such implementations, the method may comprise measuring the transmitter SNR with the frequency response of the optical transmitter being compensated.

In any of the above implementations, the method may further comprise receiving the optical noise information from the remote optical transceiver via the fiber-optic link.

Any of the above implementations of the method may comprise receiving the optical noise information from a database of OSNR values for a plurality of fiber optic link configurations, or values indicative thereof.

An aspect of the present disclosure relates to an apparatus comprising: a coherent optical transceiver including an optical transmitter and an optical receiver, the optical transmitter being configured to convert a digital data signal into a data-modulated optical signal having a signal bandwidth, and to transmit the data-modulated optical signal to a remote optical transceiver via an fiber-optic link, the optical receiver being configured to receive an optical signal via the fiber-optic link from the remote optical transceiver. The optical transmitter is configured to modify a spectral shape of the digital data signal based on information indicative of a first signal-to-noise ratio (SNR) for the data-modulated optical signal received via the fiber-optic link at the remote optical transceiver, so as to provide a partial pre-compensation for a high-frequency roll-off of a frequency response of the optical transmitter. In at least some implementations of such an apparatus, the pre-compensation may be corporately stronger for comparatively smaller values of the first SNR

## BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:

FIG. 1 illustrates a general block diagram of an optical communication system with OSNR guided transmitter pre-emphasis;

FIG. 2 illustrates a block diagram of an optical communication system using transmitter pre-emphasis that is guided by OSNR information fed back by a remote optical transceiver;

FIG. 3 illustrates a block diagram of an optical communication system using transmitter pre-emphasis guided by an OSNR information about an fiber-optic link from a local model or local databank;

FIG. 4 illustrates a block diagram of an embodiment of the optical communication system of FIG. 1 with the receiver OSNR information fed back by a remote optical transceiver over a bi-directional fiber-optic link ;

FIG. 5 is a schematic block diagram of an example optical transmitter for the optical communication systems of FIGs. 1, 2, or 3;

FIG. 6 is a graph schematically illustrating a high-frequency roll-off of a frequency response transmitter of an optical transmitter;

FIG. 7 is a schematic block diagram of an example optical receiver for the optical communication system of FIGs. 1, 2, or 3;

FIG. 8 is a schematic block diagram illustrating functional blocks of a digital signal processor (DSP) configured to provide digital pre-emphasis at an optical transmitter according to an embodiment;

FIG. 9 is a flowchart of a method for adaptive signal pre-emphasis at an optical transmitter according to an embodiment;

FIG. 10 is a graph illustrating the spectral shape of exemplary link-adaptive pre-emphasizes at the optical transmitter for different amounts of optical noise added to the data-modulated optical signal by the fiber-optic link.

FIG. 11 is a graph illustrating example optical spectra of a data-modulated optical signal at an output of an optical transmitter with link-adaptive transmitter pre-compensation, for two OSNR values, and without such pre-compensation;

FIG. 12 is a schematic block diagram of a coherent optical communication system with digital pre-emphasis guided by OSNR estimation for an fiber-optic link.

## DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "electrically connected" and its derivatives encompasses both DC and AC connections, unless explicitly stated otherwise.

The present disclosure describes link-adaptive digital pre-compensation at an optical transmitter of an optical fiber communication system, in which an optical transmitter ("Tx") is connected to a remote optical receiver ("Rx") via a fiber-optic link, e.g., including one or more optical finer amplifiers, such as an erbium-doped fiber amplifier (EDFA). The pre-compensation takes into account information indicative to optical noise that the fiber-optic link adds to the optical signal at the input to the remote optical receiver, e.g. a relative amount thereof. In some implementations, said information my comprise, or be indicative of, at least an estimate of an optical signal to noise ratio (OSNR) at the remote optical receiver end of the fiber-optic link, or a value or values related thereto. The pre-compensation typically takes the form of pre-emphasis at a high-frequency end of the spectrum of a data signal to be transmitted, and may also be referred to here as (digital) pre-emphasis.

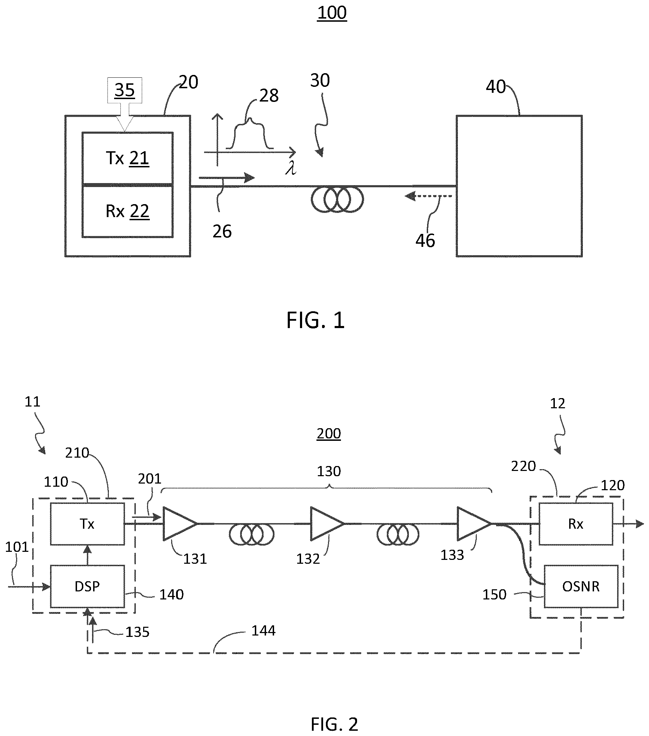

Referring to FIG. 1, an optical fiber communication system 100 includes a coherent optical transceiver 20, which in turn includes an optical transmitter 21 and an optical receiver 22. The optical transmitter 21 is configured to transmit a data-modulated optical signal 26 to a remote optical transceiver 40 via an fiber-optic link 30. The optical receiver 22 is configured to receive a return optical signal 46 via the fiber-optic link 30 from the remote optical transceiver 40. The optical transmitter 21 is configured to shape an optical spectrum 28 of the data-modulated optical signal 26 based on optical noise information 35. The optical noise information 35 may be indicative of optical noise added to the optical signal 26 by the fiber-optic link 30. In at least some embodiments, the optical noise information may be indicative of a signal-to-noise ratio (SNR) for the data-modulated optical signal received via the fiber-optic link at the remote optical transceiver. In some embodiments, the transceiver 20 may be configured to extract the optical noise information from the return optical signal 46. In some embodiments, the transceiver 20 may be configured to receive the optical noise information 35 from a server, e.g., that is separate from the remote transceiver 40.

When operating at a high baud rate B, e.g. at about 100 giga-baud or higher, the width of the optical spectrum 28 may be affected by bandwidth limitations of various components of the optical transmitter 21. The optical transmitter 21 may be configured to at least partially compensate for these limitations so as to broaden and at least partially flatten the optical spectrum 28. In at least some embodiments the degree of this compensation may depend on the optical noise information. In some embodiments, the optical transmitter 21 may be configured to provide stronger compensation for lower optical noise in the fiber optic link 30, so that the optical spectrum 28 at the output of the optical transmitter 21 may be somewhat narrower when the fiber-optic link 30 contributes less optical noise in the optical signal 28 received at the transceiver 40.

In examples described below, embodiments of the optical transmitter 21 may implement a method that includes converting a digital data signal into an electrical operating signal, driving an electro-optical (EO) converter with said electrical operating signal to produce a data-modulated optical signal carrying the digital data signal, and transmitting said data-modulated optical signal to an fiber-optic link optically connected to a remote optical transceiver. The converting may include spectral shaping such that the data-modulated optical signal, of an individual wavelength channel, is based on optical noise information indicative of an SNR for the data-modulated optical signal received via the fiber-optic link at the remote optical transceiver.

Furthermore, in examples described below, embodiments of the optical transmitter 21 may be configured to shape the optical spectrum at the transmitter output by providing a high-frequency pre-emphasis to an input digital data signal to be transmitted. The degree of this pre-emphasis may depend on the optical noise information, e.g. the pre-emphasis may be comparatively stronger for comparatively lower optical noise in the fiber optic link 30.

FIG. 2 schematically illustrates a simplified block diagram of an example optical fiber communication system 200 with link-adaptive pre-compensation of digital data signals to be transmitted. The optical fiber communication system 200 may be an embodiment of the optical fiber communication system 100 described above. A transmitter 210 of system 200 includes an optical transmitter 110, which is hereinafter referred to as Tx 110, and a digital signal processor (DSP) 140 operatively coupled thereto. The Tx 110 connects optically via a fiber-optic link 130 to a remote optical receiver 120, which is hereinafter referred to as Rx 120 and is a part of a remote receiver 220. The Tx 110 is configured to transmit a data-modulated optical signal 201 to the Rx 120 via the fiber-optic link 130. The fiber-optic link 130 may include, e.g., one or more fiber-optic amplifiers, e.g. EDFAs, as illustrated at 131, 132, and 133. Although three optical fiber amplifiers are shown, fewer or more may be present; often one or more optical fiber amplifier may be present in the fiber-optic link 130. The Tx 110 may be a part of an optical transceiver of a first optical node 11, while the Rx 120 may be a part of an optical transceiver of a remote second optical node 12. In the context of this embodiment the first optical node 11 may also be referred as the Tx node 11, and the second optical node 12 may also be referred as the Rx node 12. The nodes 11 and 12 may or may not be parts of a broader fiber-optic network.

The digital signal processor 140, also referred to herein as the Tx DSP 140, is configured to modify, i.e. to pre-compensate, an input data signal 101 to be transmitted via the fiber-optic link 130 to the Rx 120. The pre-compensation is performed based in part on information, referred to herein also the (link) optical noise information, that is indicative of an amount of optical noise that fiber-optic link 130 contributes into the transmitted signal, e.g. due to the ASE (amplified spontaneous emission) in the optical amplifiers 131-133. In some embodiments the optical noise information may be indicative of the SNR for the data-modulated optical signal received via the fiber-optic link 130 at the remote optical receiver 220. In some embodiments the optical noise information may comprise an optical signal to noise ratio (OSNR), or an estimate thereof, for the data-modulated optical signal 201 at the remote receiver 220.

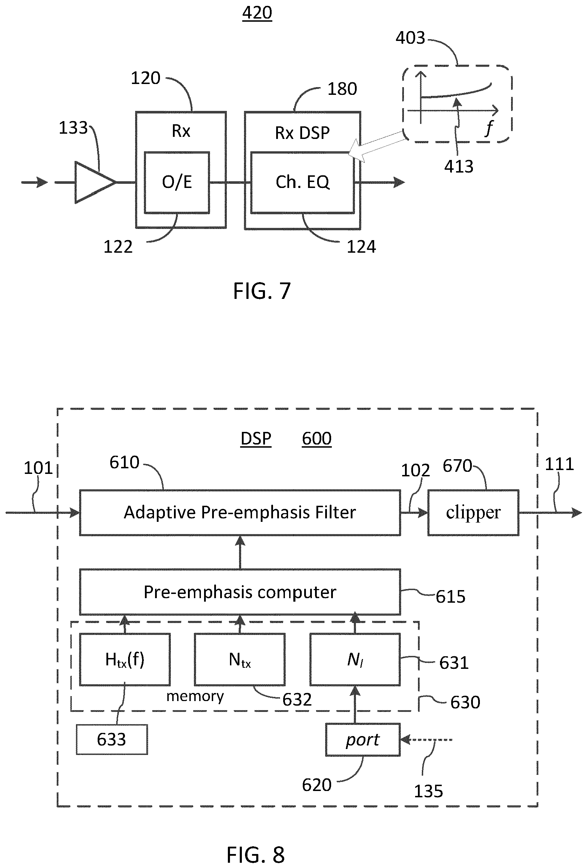

In some embodiments, the Tx DSP 140 may include a memory unit , e.g. memory 630 illustrated in FIG. 7, that is configured to receive or store the link optical noise information. Memory 630 may also be implemented with a digital data storage device in communication with the Tx DSP 140 The Tx DSP 140 may further include a pre-compensation processor, e.g. implementing an adaptive digital pre-emphasis filter, configured to modify the input data signal 101 in a manner responsive to the optical noise information.

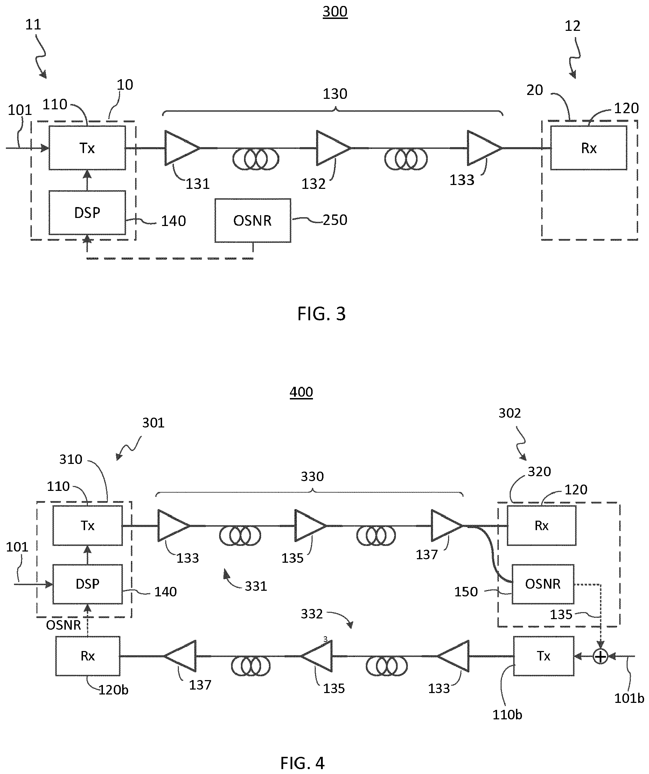

The optical noise added to the signal 201 by the fiber-optic link 130, or a value indicative thereof, may be obtained at the Rx node 12, and then transmitted back to the transmitter 210 over a feedback link 144 as the link optical noise information 135. The feedback link 144 may use diverse data communication technologies, e.g., a wireless, wire, or optical communication link or any combination thereof. One convenient measure of the optical noise added to the signal by the fiber-optic link 130 is the OSNR at the receiver end of the link at a wavelength of the optical transmission channel, as described below more in detail. In the embodiment of FIG. 2, the OSNR for the data-modulated optical signal 201 at the remote end of the fiber-optical link 130 may be measured by tapping off a small portion of the optical signal received from the fiber-optic link 130 at the Rx node 12, and feeding the tapped off portion to an OSNR meter 150. The OSNR meter may be, e.g. an optical spectrum analyzer coupled to a suitable processor, or an optical channel monitor (OCM) module capable of OSNR measurements. The OSNR measurement may also be performed for an optical carrier that is not modulated by a data signal, or modulated at a rate smaller than the OSNR measurement bandwidth. The OSNR measured for an optical transmission channel at the receiver end of a fiber-optic link, which may be referred here as the (fiber-optic) link OSNR, is indicative of the contribution of optical noise in the link 130 into the channel signal noise at the Rx 120. The OSNR at the remote end of a fiber-optic link generally depends on the distribution of optical loss in the fiber-optic link, noise characteristics of the optical amplifiers in the link, e.g. EDFAs 131-133 in the illustrated example, and the optical power of the data-modulated optical signal 201 at the Tx end of the link. The optical noise information 135, which may be e.g., the fiber-optic link OSNR or a value or values indicative thereof, may be used by the Tx DSP 140 for adapting a pre-compensation or pre-emphasis filter that is applied to the input data signal 101. In some embodiments the link OSNR information may be transmitted back to the Tx node 11 optically via a return optical signal, if the link 130 is bi-directional, as described further below with reference to FIG. 4.

FIG. 3 schematically illustrates a simplified block diagram of an example optical communication system 300 with fiber-optic link-adaptive pre-compensation of input data signals to be transmitted by the optical transmitter 110.

System 300 is generally similar to system 200, except that the Tx DSP 140 does not require a feedback from the remote Rx node 12, but obtains an estimate of the fiber-optic link OSNR, or information or a value indicative thereof, independently, from an OSNR data server 250. The OSNR data server 250 may be local to the Tx site where the transmitter 210 is located, or may be located remotely in data communication with the Tx DSP 140, e.g. via the internet or an intranet. In some embodiments, the OSNR data server 250 may be a computer configured to execute a computational link model for the fiber-optic link 130 based on relevant known link parameters. In some embodiments, the OSNR data server 250 may comprise a database of OSNR information for a plurality of fiber-optic link configurations, or information indicative thereof. For example, in some embodiments, the OSNR data server 250 may comprise a database of fiber-optic link OSNR values, or information or values indicative thereof, that were measured, computed, or otherwise estimated for different sets of fiber-optic link parameters, and may select and serve to the Tx DSP 140 the OSNR information relevant to the specific fiber-optic link 130, for example, a particular fiber-optic link OSNR or SNR value selected from a plurality of stored fiber-optic link OSNR or SNR values based on known parameters of the fiber-optic link 130.

FIG. 4 schematically illustrates a simplified block diagram of an example optical communication system 400, which may be viewed as an embodiment of system 200 with a bi-directional fiber-optic link 330 connecting optical transceiver nodes 301 and 302, which may be embodiments of nodes 11 and 12 described above. Elements having same functions as corresponding elements shown in FIGs. 2 and 3 are labeled with same reference numerals and may not be described here again. The bi-directional fiber-optic link 330 includes two fiber-optic links 331 and 332, for transmitting optical signals in opposite directions, with the fiber-optic link 331, referring to as the forward link, being an embodiment of fiber-optic link 130 described above. Each of the fiber-optic links 331 and 332 may be as described above with reference to fiber-optic link 130. The return fiber-optic link 132 transmits a return data signal 101b to node 301, and also transmits to node 301, over the return fiber-optic link 332, link optical noise information 135 pertaining to the forward fiber-optic link 331. Node 301 may be an embodiment of node 11 that also includes, in addition to the optical transmitter 310 that connects to the forward fiber link 331, an optical receiver (Rx) 120b that connects to the return fiber link 332 of the bidirectional fiber-optic link 130. Similarly, node 302 may be an embodiment of node 12 that includes, in addition to the Rx 120 optically coupled to the distal end of the forward fiber link 331, an optical transmitter (Tx) 110b that connects to the return fiber link 332 of the bidirectional fiber-optic link 130. Nodes 301, 302 may be referred to as the first and second optical transceiver nodes, respectively. The OSNR meter 150 at node 302 sends the optical noise information 135, pertaining to the forward link 331, to the Tx 110b for transmitting to node 301 over the return fiber link 332, possibly multiplexed with a return data signal 101b. The optical noise information 135 may be indicative of an OSNR value measured by the OSNR meter 150. At node 301, the optical noise information 135 pertaining to the forward fiber-optic link 331 is demultiplexed from the received optical signal, optionally decoded, and passed to the DSP 140, where it may be used for computing a pre-compensation or pre-emphasis filter $H_{pre}(f)$ as described below.

It will be appreciated that the link designation as "forward" and "return" may be arbitrary, and system 400 may implement fiber-optic link-adaptive pre-compensation at transmitter sites bidirectionally. Accordingly, node 301 may also include an OSNR meter (not shown) to measure light tapped-off from the optical receiver end of the return fiber-optic link 132, and the optical noise information, e.g. a measured OSNR, for the return fiber-optic link 132 may then be transmitted optically to node 302 by the Tx 110 over the forward fiber-optic link 331. Furthermore, node 302 may also include a Tx DSP (not shown) receiving the optical noise information for the fiber-optic link 332, which may be extracted form a signal received by the Rx 120, with said Tx DSP adaptively pre-compensating data signals 101b prior to sending them to node 301 over the return fiber-optic link 332.

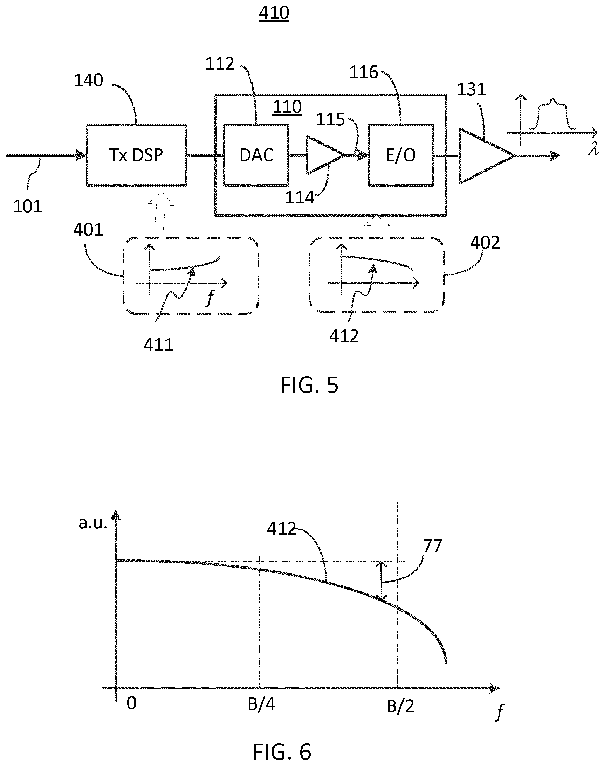

FIG. 5 shows a schematic block diagram of a transmitter 410, which may be an embodiment of the transmitter 210 or the transmitter 310, as described above. In this embodiment, the Tx 110 includes a digital-to-analog converter (DAC) 112 at its input, which receives a digitally pre-compensated data stream from the DSP 140. The output of the DAC 112 output may, e.g., connect to driver 114, which may include, e.g. a broad-band RF (radio frequency) amplifier. The driver 114, in turn, connects to an electro-optic (EO) converter 116. The Tx DSP 140, DAC 112, and driver 114 cooperate to convert the input data signal 101 into an operating signal 115 for the EO converter 116. The EO converter 116 may be an optical modulator connected to a source of optical radiation, e.g., an optical communications laser. Examples of the EO converter 116 include, but are not limited to, an optical modulator connected at its optical input to an optical communication laser. Examples of an optical modulator that may be used include but are not limited to a Mach-Zehnder modulator (MZM), In-phase (I) / Quadrature-phase (Q) modulator, and a nested MZM, e.g., supporting I and Q modulation on each of two orthogonal polarizations. Optical signals generated by the EO converter 116 may be pre-amplified by an output EDFA 131, which may be configured to output into the fiber-optic link 130 or 131 a data-modulated optical signal of a pre-determined fixed optical power.

The Tx DSP 140 is connected to receive an input data signal 101, i.e., a digital data stream, and apply a fiber-optic link-adaptive pre-compensation thereto. This link-adaptive pre-compensation may be, e.g., described as applying a digital filter with a link adaptive spectral response function $H_{pre}(f)$ 411, where $f$ is a frequency, as schematically illustrated by an insert 401 in FIG. 5. Typically, a response function $H(j)$ of a device, e.g., a fiber-optic link, may be described by a spectral function that relates signal spectrum $X_{in}(f)$ at input to the signal spectrum $X_{out}(f)$ at the output,

$$X_{out}(f) = H(f) \cdot X_{in}(f) + n(f), \qquad (1)$$

where $n(f)$ denotes noise that may be added to the output signal by the device. The added noise term may be omitted for digital devices, such as e.g. a Tx DSP in a typical optical fiber communication system. The effect of the Tx 110 on the input data signal 101 may be described with a Tx response function $H_{tx}(f)$ 412 as schematically illustrated an insert 402. The Tx response function $H_{tx}(f)$ 412 describes a cumulative effect of the DAC 112, the driver 114, and the EO converter 116; due to bandwidth limitations of different components of the Tx 110, the Tx transfer function $H_{tx}(f)$ tends to roll-off at high frequency, which may be at least partially compensated for by the pre-compensation at the Tx DSP 140. In the context of this specification, "high-frequency" is used relative to a symbol rate $B$ and refers to frequencies $f$ greater than about $B/4$. An illustrative example of a high-frequency roll-off 77 of the Tx response function 412 at frequencies above about B/4 is also schematically illustrated in FIG. 6.

FIG. 7 shows a schematic block diagram of a receiver 420, which may be an embodiment of the optical receiver Rx 120 described above. In this embodiment the receiver 420 includes the Rx 120 which in turn includes an opto-electric (OE) converter 116, which may include one or more photodetectors (PD), and which may also include other optical components for phase-sensitive optical detection such as 90-degree optical hybrids, polarization converters, local oscillators, balanced PD-pair, differential detectors without, e.g., low-pass output filters, etc. The Rx 120 may be preceded by an input optical amplifier, which may be configured to boost optical power of the signal to the Rx to a prescribed level. Electrical signal or signals from the output(s) of the OE converter 122 are provided to an Rx DSP 180, which may be configured to implement a channel equalizer 124. The channel equalizer 124 may be for example a zero-forcing channel equalizer, or it may implement any suitable channel equalization techniques known in the art. The Rx DSP 180 may also implement other processing to compensate for distortions of the optical signal by the fiber-optic link and error correction. An analog-to-digital converter (ADC) may be provided (not shown) in the signal path between the Rx 120 and the Rx DSP 180. The receiver channel equalization may be symbolically described by a post-equalization response function $H_{post}(f)$ 413, as schematically illustrated in insert 403.

One approach to pre-compensation at the Tx site, e.g. the transmitter 10, 310, or 410, is to select the pre-compensation or pre-emphasis filter as an inverse of the Tx response function $H_{tx}(f)$ 412, so that

$$H_{pre}(f) = \frac{1}{H_{tx}(f)} \qquad (2)$$

Here $H_{pre}(f)$ is the filter response function implementing digital pre-emphasis of the input data signal 101. The use of the pre-compensation or pre-emphasis filter described by equation (2) for frequencies up to and above $B$ should result in a flat frequency response of the transmitter 410 up to the frequencies at which equation (2) holds. Accordingly, transmitters using pre-compensation according to equation (2) may be referred to as 100% pre-compensated. In some optical transmission systems, e.g. those limited by amplified spontaneous emission (ASE) noise from fiber-optic amplifiers, this approach appears to perform well. However, such an approach may be less successful when the ASE noise is not the dominant noise source in the system, which may be the case e.g. for high baud-rate transmission systems, including coherent optical transmission systems. For high baud-rate transmissions, due to the bandwidths limitation of opto-electronics components, the optical transceiver noise may become significant and can even dominate such ASE noise, e.g. for short distance transmission such as metro applications. In this case, the 100% pre-compensation approach described by above equation (2) may be sub-optimal, e.g., due to the complicated interplay among different noise sources in an optical communication system with post-reception equalization.

FIG. 8 illustrates a simplified functional block scheme of a Tx DSP 600 that may be employed in embodiments of the present disclosure for fiber-optic link adaptive pre-compensation at the optical transmitter, e.g. it may be used as the Tx DSP 140 described above. Functional blocks of the Tx DSP 600, which may be implemented e.g. using programmable hardware logic, application-specific integrated circuit (ASIC), and the like, include an adaptive pre-emphasis (APE) filter 610, which is operatively coupled to a pre-emphasis (PE) computer 615, which is in turn coupled to memory 630. Memory 630 may include, e.g., a first memory unit 631 for storing fiber-optic link SNR information, for example the conventional OSNR at the remote-receiver end of the fiber-optic link or the SNR for the data-modulated optical signal at the remote optical receiver, or information representative thereof. Memory 630 may further include a second memory unit 632 for storing transmitter noise information, and a third memory unit 633 for storing information representative of the transmitter response function $H_{tx}(f)$. Memory 630, or parts thereof, may also be implemented as a digital storage device in communication with the Tx DSP 600. The Tx DSP 600 may further include an input data port for receiving the stream of data 101 to-be-transmitted, and an input port 620 for receiving the fiber-optic link SNR information 135.

In operation, an input digital data signal 101, e.g. in the form of a stream of data symbols, is passed through the APE filter 610, which outputs a modified digital signal 111, which has been pre-compensated, typically to provide a degree of pre-emphasis at the high-frequency end of the signal spectrum, i.e., modifying the spectral shape of the input digital data signal 101. The modified digital signal 102 may then pass through a signal clipping block 670 to clip its output power, e.g. in such a way that the output digital signal 111 has a fixed peak-to-average power ratio (PAPR). The inventor believes that the pre-compensation approach described herein may function also in the absence of the signal clipping block 670. The pre-emphasis computer 615 may be configured to compute one or more filter parameters for the APE filter 610, or a spectral response function $H_{pre}(f)$ thereof, based on the fiber-optic link SNR information and the transmitter SNR information stored in memory 630. In some embodiments, the pre-emphasis computer 615 may be configured to select a suitable response function of the APE filter 610 $H_{pre}(f)$, based on the content of at least the memory unit 631, from a plurality of pre-stored filter parameters or filter response functions that may be stored in memory 630, or some other memory operatively coupled to the DSP 600.

In some embodiments, the pre-emphasis computer 615 may be configured to compute the pre-compensation function $H_{pre}(f)$ based on the Tx response function $H_{tx}(f)$, a transmitter noise value $N_{tx}^2$ and a fiber optic link noise value $N_l^2$. Here, $N_{tx}^2$ is the transmitter noise energy or power in the Tx signal at the output of the optical transmitter normalized to the signal energy or power, and the $N_l^2$ is the optical noise energy or power normalized to the signal energy or power, at the receiver end of the fiber-optic link.

In some embodiments, the pre-emphasis computer 615 may be configured to compute the pre-compensation function $H_{pre}(f)$ based on the Tx response function $H_{tx}(f)$, $N_{tx}^2$, and $N_l^2$, approximately in accordance with the following equation (3):

$$H_{pre}(f) = \sqrt[4]{\frac{1}{H_{tx}^2(f)\left(1+k\cdot H_{tx}^2(f)\right)}} \qquad (3)$$

where $k = \dfrac{N_l^2}{N_{tx}^2}$ may be referred herein an electrical to optical transmission (EOT) noise ratio, and the frequency response functions $H_{pre}(f)$ and $H_{tx}(f)$ defined for an input data signal 101 of unit spectral amplitude $X_{in}(f)$, $|X_{in}(f)| = 1$. Equation (3) provides an approximate expression for the pre-emphasis function $H_{pre}(f)$ that the inventor believes may increase the quality of the data signal at the output of a receiver's channel equalizer, e.g. channel equalizer 124 in FIG. 7, e.g., by lowering the bit error rate (BER) in the optical receiver. Equation (3) has been derived assuming the use of a zero-forcing channel equalizer, but is believed to describe a pre-emphasis filter that may be useful at the optical transmitter for other suitable channel equalizers at the remote optical receiver. The inventor believes that the use of optical transmitter pre-emphasis in approximate accordance with equation (3) may provide SNR gain at the optical receiver's output.

In embodiments where the optical channel noise dominates, $N_l^2 \gg N_{tx}^2$, or the EOT noise ratio $k \gg 1$, the response function of the pre-emphasis filter given by equation (3) is simplified to the form of a conventional transmitter pre-emphasis filter given by equation (2) that provides a substantially 100% compensation of the spectral non-uniformities of the optical transmitter response $H_{tx}(f)$. In embodiments where the optical channel noise is comparable to the transmitter noise, i.e. the EOT noise ratio $k$ is on the order of 1 or smaller, equation (3) corresponds to an incomplete pre-compensation of spectral irregularities of the transmitter response $H_{tx}(f)$, e.g. the high-frequency roll-off thereof. In embodiments where the transmitter noise dominates, $N_l^2 \ll N_{tx}^2$ or the EOT noise ratio $k \ll 1$, the response function of the pre-emphasis filter $H_{pre}(f)$ is given by the following equation (4), describing a partial transmitter pre-compensation, providing e.g. a lesser degree of high-frequency pre-emphasis than the conventional transmitter pre-compensation of equation (2):

$$H_{pre}(f) = \sqrt{\frac{1}{H_{tx}(f)}}. \qquad (4)$$

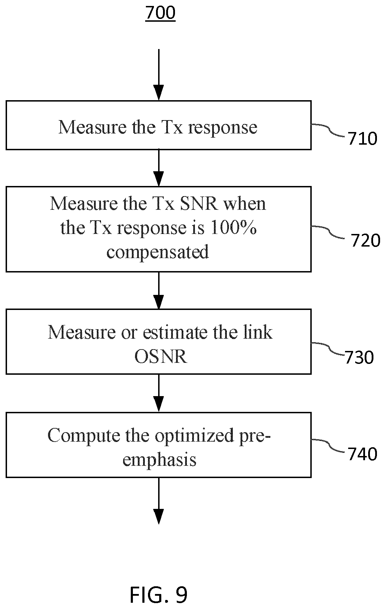

Referring now to FIG. 9, a method for pre-compensation at an optical transmitter of a fiber-optic communication system may include the steps of: (710) obtaining information indicative of the frequency response $H_{tx}(f)$ of the optical transmitter, (720) obtaining a transmitter noise characteristic, e.g. an SNR value at the transmitter output, or information indicative thereof; (730) obtaining optical noise information indicative of the optical noise added to the data-modulated optical signal by the fiber-optic link, e.g. the SNR for the optical data-modulated signal received by an optical receiver at the remote end of the fibre-optic link, or the OSNR at the remote end of the fiber-optic link, or values indicative thereof; and (740) computing optical transmitter pre-compensation or pre-emphasis filter parameters based on the transmitter frequency response $H_{tx}(f)$, and the optical transmitter and optical noise information obtained at steps (710), (720), and (730).

The frequency response $H_{tx}(f)$ of the optical transmitter may be measured directly, and may be available from the optical transmitter calibration, e.g., at the manufacturing stage or at a later calibration. $H_{tx}(f)$ or information indicative thereof may be stored at the Tx DSP, i.e., at the memory unit 633, and, in operation, may be obtained by the pre-emphasis computer 615 from the memory. The transmitter noise characteristic in step (720) may be also obtained at an optical transmitter's manufacturing stage or a later calibration stage. Such a transmitter noise characteristic may be, e.g., the transmitter noise parameter $N_{tx}^2$ described above.

One method to obtain an estimate of the optical transmitter noise parameter $N_{tx}^2$ is to measure the SNR at an optical receiver with the optical transmitter and optical receiver connected in a back-to-back configuration, i.e. in the absence of an amplified optical link therebetween, e.g., while applying a 100% pre-compensation at the transmitter in accordance with equation (2). The optical transmitter noise parameter $N_{tx}^2$ may then be estimated from the back-to-back SNR value $SNR_{tx}$ in accordance with equation (5):

$$N_{tx}^2 = SNR_{tx} \int \frac{1}{H_{tx}^2(f)} \, df \qquad (6)$$

The fiber-optic link noise parameter $N_l^2$ relates to the SNR of the optical data-modulated signal at the optical receiver's end of the fiber-optic link, denoted $SNR_l$, in accordance with equation (7):

$$\frac{1}{SNR_l} = N_l^2 \qquad (7)$$

$SNR_l$ is a ratio of the optical signal power, within a bandwidth $Bw$ of a wavelength channel carrying the data-modulated optical signal, to the optical noise power within the same bandwidth $Bw$, at the remote optical receiver-end of the fiber-optic link. The optical noise power may be e.g. the optical power of the ASE from the optical amplifiers within the bandwidth $Bw$. The frequency bandwidth $Bw$ of the wavelength channel carrying the data-modulated optical signal may be approximated by the baud rate $B$. The value of $SNR_l$ may be estimated, e.g., from an OSNR at the input of an optical receiver at the remote end of the fiber-optic link. An OSNR may be measured, e.g. as a ratio of an optical power within the bandwidth $Bw$ of the wavelength channel of the data-modulated optical signal to an optical power of the ASE within an optical bandwidth $F$ somewhat away from the wavelength channel. Such an OSNR may be either measured at the optical receiver's end of the fiber-optic link, e.g. using the OSNR meter 150, or otherwise estimated as described above. In such embodiments, $SNR_l$ may be estimated e.g. in accordance with equation (8) below

$$\mathrm{SNR}_l = OSNR \frac{F}{B} \qquad (8)$$

where $F$ is the bandwidth of the optical noise measurement. By way of example, the optical bandwidth $F$ of the ASE measurement may be approximately 0.1 nanometer, which in the C band of the optical telecommunication spectrum, i.e. at wavelengths in the 1530 nm to 1565 nm range, is about 12.5 GHz.

Accordingly, the pre-compensation filter response $H_{pre}(f)$ of equation (3) may also be presented in a form dependent on a ratio of the transmitter and link SNRs

$$H_{pre}(f) = \sqrt[4]{\frac{1}{H_{tx}^2(f)\left(1+k \cdot H_{tx}^2(f)\langle\frac{1}{H_{tx}^2(f)}\rangle\right)}} \qquad (9)$$

where $\langle\frac{1}{H_{tx}^2(f)}\rangle = \int \frac{1}{H_{tx}^2(f)}df$ , and where the EOT noise factor $k$ is defined by a ratio of the SNR value $SNR_{tx}$ of the optical transmitter to the SNR value $SNR_l$ for a data-modulated optical signal received via the fiber-optic link at the remote optical transceiver:

$$k = \frac{SNR_{tx}}{SNR_l} \qquad (10)$$

Accordingly, in some embodiments the method 700 of FIG. 8 may include determining an SNR value $SNR_{tx}$ for the optical transmitter, e.g. Tx 110, and an SNR value $SNR_l$ for the fiber-optic link to which the transmitter transmits, e.g., fiber-optic link 130, 331, or 332, or at least obtaining information indicative thereof, and adjusting the transmitter pre-compensation filter, e.g. the APE filter 610, based on a ratio of these SNR values, e.g., approximately according to above equations (9) and 10. The adjusting may include computing the pre-compensation response function, or one or more parameters thereof, e.g. approximately in accordance with equation (3), or equations (9) and 10, or the like, e.g. with the PE computer 615, and updating the response function of the transmitter pre-compensation filter, e.g. the APE filter 610, in accordance with the computed pre-compensation function or parameters thereof. In various embodiments the method may include computing a ratio of noise values for the optical transmitter and the fiber-optic link, termed the EOT noise ratio, e.g. a ratio of the SNR values SNR$_{tx}$ and SNR$_l$ or a ratio of the noise power values $N_l^2$, $N_{tx}^2$. In some embodiments, the PE computer 615 may update the APE filter 610 each time when the transmitter-link noise ratio exceeds one of a sequence of pre-defined threshold values.

As described above, in some embodiments the optical transmitter, e.g. the Tx DSP thereof, may be configured to provide a frequency-selective pre-emphasis to a frequency response of the optical transmitter to, at least, partially pre-compensate for a high-frequency roll-off of a transmitter response function. Typically, the pre-emphasis will be comparatively stronger for comparatively smaller values of the optical noise in the fiber optic link, e.g., for the comparatively smaller values of the EOT noise ratio $k$.

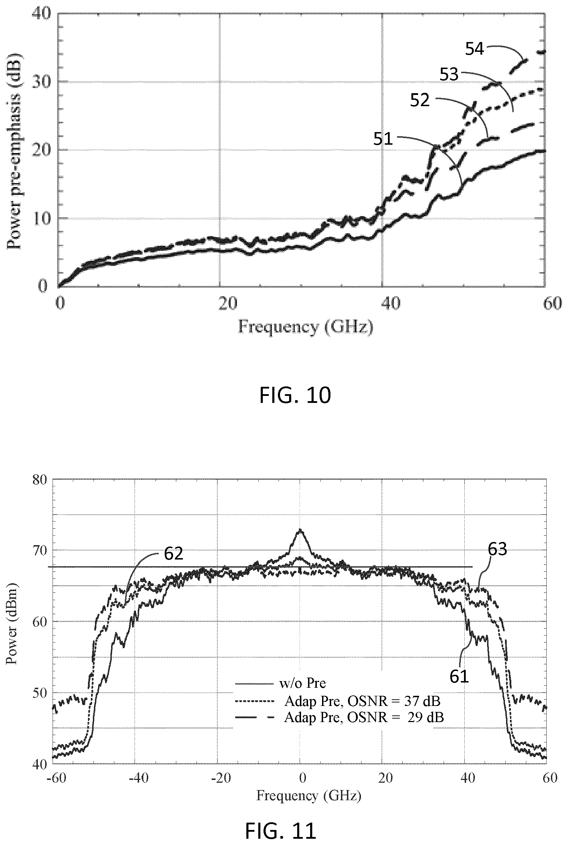

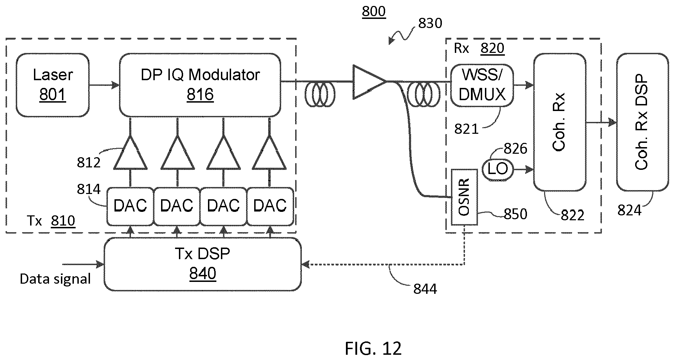

FIG. 10 illustrates, by way of example, possible spectral shapes of a transmitter pre-compensation function, e.g. the pre-compensation function 411 of the Tx 110 in FIG. 5, which may be used to pre-compensate an optical transmitter for four different optical noise levels in a fiber-optic link to which the optical transmitter connects, according to an embodiment of the present disclosure. In this example, the optical transmitter is a coherent optical transmitter, e.g. as described below with reference to FIG. 12, that is configured for 100 Gbaud, 256 QAM transmission. The transmitter pre-compensation functions 51-54 correspond, e.g., to the frequency response H$_{pre}$(f) of a transmitter pre-compensation filter, e.g. for the APE filter 610, and are shown for the spectral power density thereof, i.e., |H$_{pre}$(f)|². All four transmitter pre-compensation functions 51-54 provide high-frequency pre-emphasis of different degrees at frequencies above about 40 GHz, or about 0.4$B$, with the baud rate $B$ providing an estimate of the signal bandwidth. Here the transmitter pre-compensation functions 51, 52, 53, and 54 correspond to the EOT noise factors of 20 decibels (dB), 10 dB, 0 dB, and -10 dB, respectively. The transmitter pre-compensation function 54, which corresponds to a situation when the electrical noise dominates the optical noise, provides the strongest high-frequency pre-emphasis, and approximates an inverse of the optical transmitter's frequency response The transmitter pre-compensation functions 51-53 correspond to progressively higher values of the EOT noise ratio $k$, where the optical noise from the fiber-optic link is about equal or exceeds the electrical transmitter noise, with progressively weaker pre-emphasis of high-frequencies and progressively lower degree of pre-compensation of the high-frequency roll-off of the transmitter response of the optical transmitter.

FIG. 11 illustrates, by way of example, the optical spectrum of a data-modulated optical signal at the output of an optical transmitter, e.g. the Tx 110, with adaptive transmitter pre-compensation as described above, when connected to fiber-optic links with different levels of optical noise. In this example the optical transmitter is a coherent optical transmitter, e.g. as described below with reference to FIG. 12, that is configured for 100 Gbaud 256 QAM transmission. The optical spectrum 61 corresponds to the absence of transmitter pre-compensation, e.g., when H$_{pre}$(f) is constant across the signal bandwidth. The optical spectrum 61 has a 3dB bandwidth of about 60 GHs, rolling off at frequencies more than 30 GHz away from the centre frequency of the optical spectrum, due in part to the high-frequency roll-off of the optical transmitter's frequency response.

The optical spectrum 63 results from the adaptive pre-emphasis at the optical transmitter, in accordance with the techniques described above, when connected to the fiber-optic link with a comparatively low optical noise and a relatively high OSNR at the remote end thereof of 37 dB. In this case the adaptive pre-emphasis nearly compensates for the high-frequency roll-off of the transmitter response function, flattens the optical spectrum at the high-frequency edges thereof, increasing the 3dB bandwidth to about 90 GHz.

The intermediate optical spectrum 62 results from the adaptive pre-emphasis at the optical transmitter, in accordance with the techniques described above, when connected to the fiber-optic link with a comparatively higher optical noise and a comparatively lower value of 29 dB for the OSNR at the remote end of the fiber-optic link. In this case the adaptive high-frequency pre-emphasis is weaker, providing only partial compensation of the high-frequency roll-off of the transmitter response function, resulting in a relatively narrower optical spectrum with the 3dB bandwidth to about 80 GHz.

FIG. 12 illustrates an example of a coherent optical communication system 800, in which embodiments of the present disclosure may be practiced. The example coherent optical communication system 800 includes an optical coherent transmitter 810, which connects to an optical coherent receiver 820 via a fiber-optic link 830. The optical coherent transmitter 810 and the optical coherent receiver 820 may be embodiments of the optical transmitter 110 and the optical receiver 120, respectively, described above. The optical coherent transmitter 810 includes an optical source 801 of coherent radiation that feeds coherent cw light to an optical modulator 816. The optical source 801 may be e.g. a laser, such as a single-mode frequency stabilized semiconductor laser having a suitably narrow linewidth, which may be wavelength-tunable. The optical modulator 816 may be, for example, an optical I/Q modulator, which may provide dual-polarization (DP) modulation with polarization multiplexing, and which may be embodied with one or two nested MZMs, to output a polarization-multiplexed, in-phase and quadrature-modulated optical signal. Here "I" and "Q" stand for the so-called "in-phase" and "quadrature" components of the modulated optical signal, which are added with about a 90° phase shift at the modulator's output. The optical modulator 816 may be configured to output optical signals modulated e.g. according to QPSK, or QAM modulation format. In this embodiment the optical modulator 816 is driven by four electrical drive signals provided by four electrical drivers 812, which are configured to amplify electrical modulation signals provided by a Tx DSP 840, which are converted into analog signals by a set of DACs 814.

The optical receiver 820 includes a coherent optical receiver 822, which may be embodied for example using, in each polarization channel, a 90° optical hybrid that is coupled at its input to the receiver end of link 830 and to a local oscillator (LO) source 826, and at its output to two pairs of differentially connected, balanced photodetectors (PDs) followed by trans-impedance amplifiers. An optional wavelength selective device 821 may be used to couple the signal input of the optical coherent receiver 822 to the fiber-optic link 830, such as e.g. a wavelength selective switch (WSS) or an wavelength demultiplexer (DMUX). The coherent optical receiver 822 converts the optical signal received from the fiber-optic link 830 into an electrical signal or signals, which are then processed by an Rx DSP 824, which may be configured to implement a receiver channel equalizer, for example a zero-forcing channel equalizer as described above.

The Tx DSP 840 may be an embodiment of the Tx DSP 140 or Tx DSP 600, and may implement the APE filter 610 that is adaptively reconfigurable based on fiber-optic link noise information, or at least an estimate thereof, as described above. In the illustrated embodiment, an OSNR meter 850 is provided locally at or near the optical receiver 820 to measure the OSNR at the receiver end of the fiber-optic link 830, and the measured OSNR value is provided to the Tx DSP 840 via a feedback link 844. The feedback link 844 may be, for example, implemented with a return optical signal via the fiber-optic link 830 or may use another type of data communication link. In embodiments where the fiber-optic link noise is not expected to undergo rapid changes, the feedback link 844 may be implemented, e.g. via an external communication network, such as the internet or an intranet. In some embodiments, the Tx DSP 840 may receive the link noise information from a data server, such as the OSNR data server 250 described above.

The examples described above are not intended to be limiting, and many variations will become apparent to a skilled reader having the benefit of the present disclosure. For example, various features described above with reference to a specific embodiment or embodiments may be combined with other embodiments.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

**Claims**

1. An apparatus comprising:

   a coherent optical transceiver including an optical transmitter and an optical receiver, the optical transmitter being configured to transmit a data-modulated optical signal to a remote optical transceiver via an fiber-optic link, the optical receiver being configured to receive an optical signal via the fiber-optic link from the remote optical transceiver; and
   wherein the optical transmitter is configured to shape an optical spectrum of the data-modulated optical signal based on optical noise information indicative of a signal-to-noise ratio (SNR) for the data-modulated optical signal received via the fiber-optic link at the remote optical transceiver.

2. The apparatus of claim 1, wherein the coherent optical transceiver includes a digital data storage device storing the optical noise information.

3. The apparatus of claim 1 or 2, wherein the coherent optical transceiver is configured to extract the optical noise information from an optical signal received from the remote optical transceiver via the fiber-optic link.

4. The apparatus of any one of claims 1 to 3, wherein the optical transmitter comprises:

   an electro-optical modulator to produce the data-modulated optical signal by modulating an optical carrier responsive to an operating signal; and
   a digital signal processor (DSP) configured to modify a spectral shape of an input digital data signal based on the optical noise information to produce the operating signal therefrom in a manner such that the operating signal causes the electro-optical modulator to shape an optical spectrum of the data-modulated optical signal responsive to the optical noise information.

5. The apparatus of claim 4, wherein the optical noise information is indicative of an optical signal to noise ratio (OSNR) for the data-modulated optical signal received via the fiber-optic link at the remote optical transceiver, and wherein the optical transmitter is configured to spectrally shape the data-modulated optical signal based at least in part on the OSNR.

6. The apparatus of claim 5, wherein the DSP is configured to provide a pre-emphasis to partially pre-compensate a spectral roll-off of the spectral response of the optical transmitter, the pre-emphasis being larger for smaller value of the OSNR

7. The apparatus of claim 5 wherein the DSP is configured to modify the spectral shape based in part on an electrical to optical transmission (EOT) noise ratio, or a value indicative thereof, wherein said EOT noise ratio is a ratio of the SNR of the optical transmitter to the SNR for the data-modulated optical signal received via the fiber-optic link at the remote optical transceiver.

8. The apparatus of claim 7, wherein the DSP is configured to provide a frequency-dependent pre-emphasis to a frequency response of the optical transmitter to at least partially pre-compensate for a high-frequency roll-off of a transmitter response function.

9. The apparatus of any one of claims 5 to 8 comprising the remote transceiver, wherein the remote transceiver is configure to measure the OSNR for the data-modulated optical signal received via the fiber-optic link at the remote optical transceiver, and to transmit to the coherent optical transceiver the optical noise information comprising the OSNR

10. A method comprising:

    converting a digital data signal into an electrical operating signal;
    driving an electro-optical modulator with said electrical operating signal to produce a data-modulated optical carrier carrying the digital data signal; and

transmitting said data-modulated optical carrier to an fiber-optic link optically connected to a remote optical transceiver; and

wherein the converting causes the data-modulated optical carrier to be spectrally shaped based on optical noise information indicative of a signal-to-noise ratio (SNR) for the data-modulated optical signal as received at the remote optical transceiver.

11. The method of claim 10 wherein the converting comprises modifying a spectral shape of the digital data signal based in part on the optical noise information so as to at least partially pre-compensate a high-frequency roll-off of a spectral response of the optical transmitter.

12. The method of claim 11 wherein the modifying is performed based in part on transmitter information indicative of an SNR of the optical transmitter.

13. The method of claim 12 comprising measuring the transmitter SNR with the frequency response of the optical transmitter being compensated.

14. The method of any one of claims 10 to 13, further comprising receiving the optical noise information from the remote optical transceiver via the fiber-optic link.

15. The method of any one of claims 10 to 14, comprising receiving the optical noise information from a database of OSNR values for a plurality of fiber-optic link configurations, or values indicative thereof.

100

Tx 21

Rx 22

35

20

28

30

40

λ

26

46

FIG. 1

11

12

200

210

130

220

110

201

120

Tx

Rx

101

131

132

133

DSP

OSNR

140

150

135

144

FIG. 2

300

FIG. 3

400

FIG. 4

410

FIG. 5

FIG. 6

420

FIG. 7

FIG. 8

<u>700</u>

```
┌─────────────────────────────┐
│   Measure the Tx response   │───── 710
└─────────────────────────────┘
              │
              ▼
┌─────────────────────────────┐
│   Measure the Tx SNR when   │
│   the Tx response is 100%   │───── 720
│         compensated         │
└─────────────────────────────┘
              │
              ▼
┌─────────────────────────────┐
│  Measure or estimate the link│
│            OSNR             │───── 730
└─────────────────────────────┘
              │
              ▼
┌─────────────────────────────┐
│  Compute the optimized pre- │
│          emphasis           │───── 740
└─────────────────────────────┘
              │
              ▼
```

FIG. 9

FIG. 10

FIG. 11

FIG. 12

Europäisches
Patentamt
European
Patent Office
Office européen
des brevets

# EUROPEAN SEARCH REPORT

**Application Number**

EP 21 20 3406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 217 573 A1 (ADVA OPTICAL NETWORKING SE [DE]) 13 September 2017 (2017-09-13) <br> * paragraph [0010]; claims 1, 4-7; figures 1,11 * <br> * paragraph [0028] * <br> * paragraph [0038] – paragraph [0052] * <br> * paragraph [0056] * <br> * paragraph [0061] * | 1-15 | INV. <br> H04B10/40 <br> H04B10/079 <br> H04B10/2507 <br> H04B10/556 |
| X | US 2016/285657 A1 (YU JIANJUN [US] ET AL) 29 September 2016 (2016-09-29) <br> * paragraph [0004] – paragraph [0006]; claims 1-3; figures 1-3,6 * <br> * paragraph [0037] – paragraph [0042] * <br> * paragraph [0047] – paragraph [0055] * | 1-15 | |
| A | ZHONG KANGPING ET AL: "Digital Signal Processing for Short-Reach Optical Communications: A Review of Current Technologies and Future Trends", JOURNAL OF LIGHTWAVE TECHNOLOGY, IEEE, USA, vol. 36, no. 2, 15 January 2018 (2018-01-15), pages 377-400, XP011677776, ISSN: 0733-8724, DOI: 10.1109/JLT.2018.2793881 [retrieved on 2018-02-15] * Section III; figures 2,4,6 * | 1-15 | |

| | | TECHNICAL FIELDS SEARCHED (IPC) |
|---|---|---|
| | | H04B |

The present search report has been drawn up for all claims

| Place of search | Date of completion of the search | Examiner |
|---|---|---|
| Munich | 30 March 2022 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 3406

30-03-2022

| Patent document cited in search report | | Publication date | Patent family member(s) | | Publication date |
|---|---|---|---|---|---|
| EP 3217573 | A1 | 13-09-2017 | EP 3217573 | A1 | 13-09-2017 |
| | | | US 2017264368 | A1 | 14-09-2017 |
| US 2016285657 | A1 | 29-09-2016 | CN 105814816 | A | 27-07-2016 |
| | | | JP 2016536948 | A | 24-11-2016 |
| | | | US 2016285657 | A1 | 29-09-2016 |
| | | | WO 2015062544 | A1 | 07-05-2015 |

For more details about this annex : see Official Journal of the European Patent Office, No. 12/82